# EUROPÄISCHE PATENTSCHRIFT

(11) **EP 2 812 592 B1**
(45) Veröffentlichungstag und Bekanntmachung des Hinweises auf die Patenterteilung: **03.02.2016**
(21) Anmeldenummer: 13703388.2
(22) Anmeldetag: 07.02.2013
(51) Int. Cl.: F16C 41/00, F16C 19/16, H02K 41/03, H02K 5/10, H02K 7/08

(54) **LAGER UND WINDKRAFTANLAGE**
BEARING AND WIND TURBINE
PALIER ET ÉOLIENNE

(30) Priorität: 10.02.2012 DE 102012202029
(43) Veröffentlichungstag der Anmeldung: 17.12.2014
(73) Patentinhaber: Aktiebolaget SKF, 415 50 Göteborg (SE)
(72) Erfinder: DE VRIES, Alexander, NL-4003 KA Tiel (NL); VAN LEEUWEN, Bernardus Gerardus, NL-3522 AG Utrecht (NL); OLSCHEWSKI, Armin, 97422 Schweinfurt (DE); STUBENRAUCH, Arno, 97491 Aidhausen (DE); ZIEGLER, Sebastian, 97535 Wasserlosen (DE)
(74) Vertreter: Kuhstrebe, Jochen
(86) Internationale Anmeldenummer: PCT/EP2013/052434
(87) Internationale Veröffentlichungsnummer: WO 2013/117644

(56) Entgegenhaltungen:
- WO-A1-2005/019642
- DE-A1-102009 017 028
- DE-A1-102009 018 361
- US-A1- 2008 164 697
- US-A1- 2010 133 838
- US-A1- 2011 187 104

## Beschreibung

Ausführungsbeispiele beziehen sich auf ein Lager und eine Windkraftanlage.

Bei Windkraftanlagen wird eine Geschwindigkeit, mit der sich ein Rotor der betreffenden Windkraftanlage dreht, häufig durch ein Verändern eines Anstellwinkels eines oder mehrerer Rotorblätter des betreffenden Rotors bewirkt. Der Anstellwinkel der Rotorblätter kann hierbei derart eingestellt werden, dass es zu einem Strömungsabriss kommt, worauf hin eine Krafteinwirkung durch anströmende Luft auf den Rotor bzw. seine Rotorblätter abbricht. Hierdurch kann der Rotor dann beispielsweise auslaufen. Dieser Vorgang wird auch als aktiver Strömungsabriss (engl.: Active Stall) bezeichnet. Eine Änderung des Anstellwinkels bedeutet hierbei, dass die Rotorblätter entlang ihrer longitudinalen Achse gedreht werden, um der anströmenden Luft, also dem Wind oder Böen eine geringere Angriffsfläche zu bieten.

Bei Windkraftanlagen ist eine entsprechende Möglichkeit zur Änderung des Anstellwinkels der Rotorblätter häufig schon deshalb sinnvoll einzuplanen, um eine Ausgangsleistung des betreffenden Systems zu limitieren und das System gegen eine Überlastung zu schützen. Der Winkel, um den die Rotorblätter gedreht werden, um die Ausgangsleistung der Windkraftanlage zu steuern, liegt typischerweise im Bereich zwischen einigen wenigen Grad bis hin zu 25° oder darüber. In Notsituationen werden hingegen die Rotorblätter häufig um 90° gedreht, um den Rotor wie oben beschrieben, zu stoppen.

Eine Änderung des Anstellwinkels der Rotorblätter kann hierbei grundsätzlich auf unterschiedlichem Wege erreicht werden. Neben rein mechanischen und hydraulischen Systemen, die bei kleineren und mittleren Windkraftanlagen mit typischen Leistungen von nicht mehr als 500 kW zum Einsatz kommen, werden gerade bei größeren windkraftanlagen mit wenigsten 500 kW elektrische Systeme verwendet. Diese können aber natürlich auch bei kleineren Windkraftanlagen zum Einsatz kommen.

Die zum Anmeldezeitpunkt nicht veröffentlichten deutschen Patentanmeldungen DE 10 2011 082 810 und DE 10 2011 082 811 beziehen sich jeweils auf ein Lager und eine Windkraftanlagen mit in diesen beiden Anmeldungen beschriebenen Lagern, bei denen die Lagerringe als Statoren und Translatoren eines Linearmotors ausgeführt sind. Gegenüber Systemen, bei denen externe Motoren im Zusammenhang mit Getrieben zum Einsatz kommen, kann bei diesen Systemen aufgrund ihrer Integration Bauraum in einem Rotorgehäuse der Windkraftanlage eingespart werden.

Aber auch bei anderen Anwendungen, bei denen gegebenenfalls nicht nur eine winkelmäßig beschränkte Verschwenkung einzelner Bauteile oder Baugruppen zueinander erfolgt, sondern bei denen auch vollständige Drehungen, gegebenenfalls auch beliebige Drehungen möglich sein sollen, können elektromotorische Antriebe in das Lager integriert werden.

Aufgrund der bei elektromotorischen Antrieben zwangsweise eingesetzten Magnetfelder, die zumindest während einer Antriebsphase des elektromotorischen Antriebs vorherrschen, können magnetische Partikel oder Teilchen in die entsprechenden Lager gelangen und dort zu Beschädigungen derselben führen. Im Falle von Wälzlagern können so beispielsweise die magnetischen Teilchen die Laufbahnen oder -flächen der Wälzkörper oder die Wälzkörper selbst beschädigen. Im Falle von Gleitlagern können die magnetischen Teilchen beispielsweise die Gleitflächen der Lagerringe beschädigen, gegebenenfalls aber auch nur zu einem Abriss eines eventuell ausgebildeten Schmiermittelfilms führen und so zu einem erhöhten Verschleiß beitragen.

Die magnetischen Partikel oder Teilchen können hierbei aus der Umgebung, aber auch aus dem Lager bzw. dem elektromotorischen Antrieb selber stammen. So können sich beispielsweise produktionsbedingte Späne und andere Partikel gegebenenfalls während des Betriebs lösen, die vor dem Einbau des Lagers nicht oder zumindest nicht vollständig entfernt wurden. Auch kann gegebenenfalls durch ein Eindringen eines anderen Partikels ein entsprechendes magnetisches Teilchen als Folge einer Interaktion mit einem der sich drehenden Teile freigesetzt werden.

Durch die zumindest während des Betriebs des elektromotorischen Antriebs herrschenden Magnetfelder können diese dann zu den zusammenfassend auch als Funktionsflächen bezeichneten Laufflächen oder Gleitflächen des Lagers gelangen und dort die beschriebenen Effekte hervorrufen.

DE 102009017028 A1 zeigt die Merkmale des Oberbegriffs des Anspruchs 1.

Es besteht daher ein Bedarf, bei einem Lager mit einem elektromotorischen Antrieb einen Kompromiss zwischen einem Bauraumbedarf und einer Betriebssicherheit des Lagers zu verbessern.

Diesem Bedarf trägt ein Lager gemäß Patentanspruch 1 und eine Windkraftanlage gemäß Patentanspruch 9 Rechnung.

Ein Ausführungsbeispiel eines Lagers umfasst so einen ersten Lagerring und einen zweiten Lagerring, wobei der erste und der zweite Lagerring zueinander um eine axiale Richtung drehbar angeordnet sind. Das Lager umfasst ferner eine Mehrzahl von benachbart zueinander angeordneten und mit dem ersten Lagerring drehfest verbundenen Magnetfeldquellen und eine Mehrzahl von mit dem zweiten Lagerring drehfest verbunden Spulen, wobei die Spulen der Mehrzahl von Spulen entlang einer senkrecht zu der axialen Richtung stehenden Umfangsrichtung benachbart zueinander in einem ersten Winkelbereich angeordnet sind. In einem zweiten Winkelbereich von wenigstens 30°, der sich unmittelbar an den ersten Winkelbereich entlang der Umfangsrichtung anschließt, sind keine Spulen angeordnet. Die Mehrzahl von Spulen und die Mehrzahl von Magnetfeldquellen sind derart angeordnet und ausgerichtet, dass diese einen elektromotorischen Antrieb bilden. Das Lager umfasst ferner ein von dem zweiten Lagerring verschiedenes Magnetfeldführungsbauteil, das ausgebildet ist, um eine Führung eines Magnetfelds zu bewirken, und das eine Mehrzahl von Aufnahmeabschnitten aufweist, auf denen jeweils eine Spule der Mehrzahl von Spulen angeordnet ist, wobei das Magnetfeldführungsbauteil einen Umfangsabschnitt umfasst, der wenigstens teilweise in dem zweiten Winkelbereich angeordnet ist.

Einem Ausführungsbeispiel eines Lagers liegt so die Erkenntnis zugrunde, dass durch das Vorsehen des Magnetfeldführungsbauteils, das den Umfangsabschnitt umfasst, der wenigstens teilweise in dem zweiten Winkelbereich angeordnet ist, eine Betriebssicherheit des Lagers dadurch verbessert werden kann, dass ein von den Magnetfeldquellen erzeugtes Magnetfeld effizienter geführt und damit eine Ausdehnung entiang der axialen Richtung begrenzt werden kann. Aufgrund der Begrenzung der axialen Ausdehnung des von den Magnetfeldquellen erzeugten Magnetfelds kann so gegebenenfalls eine Gefahr einer Interaktion des Magnetfelds mit einem magnetischen Partikel oder einem magnetischen Teilchen reduziert werden. Hierdurch kann die Betriebssicherheit des Lagers verbessert werden, ohne einen Bauraumbedarf für das Lager signifikant zu erhöhen.

Die Magnetfeldquellen der Mehrzahl von Magnetfeldquellen, die auch als Magnetfelderzeuger oder Magnetfeldgeneratoren bezeichnet werden, sowie die Spule bzw. die Spulen der Mehrzahl von Spulen sind hierbei derart angeordnet und ausgerichtet, dass diese einen elektromotorischen Antrieb bilden. So sind die Spulen typischerweise derart ausgerichtet, dass ein von den Magnetfeldquellen erzeugtes oder bewirktes Magnetfeld die Spulen derart durchdringt, dass im Falle eines Stromdurchflusses eine Lorentzkraft auf diese einwirkt. Die Lorentzkraft bildet hierbei die physikalische Grundlage, die den elektromotorischen Antrieb ermöglicht und bewirkt.

Zu diesem Zweck können die Spulen beispielsweise eine Stirnfläche aufweisen, die im Wesentlichen mit einer Fläche oder einer Ebene übereinstimmt, in der die Windungen der Spule angeordnet sind. So können bei einem Ausführungsbeispiel die Spule oder die Spulen der Mehrzahl von Spulen mit ihren jeweiligen Stirnflächen im Wesentlichen senkrecht zu einer Ausrichtungsfläche ausgerichtet sein, die so ausgeformt ist, dass die Magnetfeldquellen der Mehrzahl von Magnetfeldquellen ihre Magnetfelder derart bewirken, dass diese im Wesentlichen in der Ausrichtungsfläche liegen. Eine solche Ausrichtungsfläche kann beispielsweise im Falle einer radialen Ausrichtung von Spulen und Magnetfeldquellen eine senkrecht zu der axialen Richtung verlaufenden ebenen Ausrichtungsfläche sein. Die radiale Richtung steht hierbei senkrecht auf der axialen Richtung und weist stets von dieser senkrecht weg.

Bei einem Lager gemäß einem Ausführungsbeispiel können so jeweils zwei benachbarte Magnetfeldquellen der Mehrzahl von Magnetfeldquellen ein Magnetfeld mit alternierender Polarität erzeugen. Anders ausgedrückt können sie derart angeordnet sein, dass zwei benachbarte Magnetfeldquellen an einer den Spulen zugewandten Seite alternierend einen Nordpol und einen Südpol aufweisen.

Bei einem Lager gemäß einem Ausführungsbeispiel kann das Magnetteldfuhrungsbauten mit dem zweiten Lagerring oder einem mit dem zweiten Lagerring drehfest verbundenen Aufnahmebauteil verbunden sein. Ebenso kann sich bei einem Lager gemäß einem Ausführungsbeispiel das Aufnahmebauteil unmittelbar entlang der radialen Richtung an das Magnetfeldführungsbauteil anschließen. Das Aufnahmebauteil kann so eine mechanische Stabilisierung des Magnetfeldführungsbauteils und seiner Aufnahme bewirken, sofern das Magnetfeldführungsbauteil beispielsweise aus einem Material gefertigt ist, welches eine von dem Material des Aufnahmebauteils abweichende mechanische Belastbarkeit oder eine andere mechanische und/oder physikalische Eigenschaft aufweist. Anders ausgedrückt können so das Magnetfeldführungsbauteil und das Aufnahmebauteil bzw. der zweite Lagerring auf unterschiedliche Anforderungen hin durch eine entsprechende Materialwahl optimiert werden.

Bei einem Lager gemäß einem Ausführungsbeispiel kann sich der Umfangsabschnitt in dem zweiten Winkelbereich wenigstens teilweise auf die Magnetfeldquellen der Mehrzahl von Magnetfeldquellen hin erstrecken. Hierdurch kann es möglich sein, einen Abstand des Magnetfeldführungsbauteils von den Magnetfeldquellen zu reduzieren und so eine Ausbreitung des von den Magnetfeldquellen erzeugten Magnetfelds zu reduzieren, also die Führung desselben zu verbessern.

Bei einem Lager gemäß einem Ausführungsbeispiel kann der Umfangsabschnitt einen Unterabschnitt aufweisen, der sich im Wesentlichen entlang der Umfangsrichtung in dem zweiten Winkelbereich von dem ersten Winkelbereich weg erstreckt. Der Unterabschnitt kann also entlang der Umfangsrichtung des Lagers von den Spulen weg weisen und so eine Führung eines Magnetfelds ermöglichen, welches von einer Magnetfeldquelle erzeugt oder hervorgebracht wird, die bei einer momentan vorliegenden Verdrehung des ersten zu dem zweiten Lagerring gerade keiner Spule gegenüberliegt, sondern dem betreffenden Unterabschnitt des Magnetfeldführungsbauteils.

Bei einem solchen Lager gemäß einem Ausführungsbeispiel kann zwischen den Magnetfeldquellen der Mehrzahl von Magnetfeldquellen und den Spulen der Mehrzahl von Spulen entlang einer senkrecht auf der axialen Richtung und der Umfangsrichtung stehenden radialen Richtung ein Spalt geformt sein. Bei einem solchen Lager kann der Unterabschnitt entlang der radialen Richtung an einer dem Spalt zugewandten Seite des Magnetfeldführungsbauteils angeordnet sein. Hierdurch kann ein Abstand des Magnetteldfuhrungsbauteils, genauer gesagt des Unterabschnitts desselben, von den Magnetfeldquellen weiter reduziert werden, sodass auch hier eine Ausdehnung des Magnetfeldes reduziert und daher eine Führung desselben gegebenenfalls verbessert werden kann.

Bei einem solchen Lager gemäß einem Ausführungsbeispiel kann der Unterabschnitt an dem Spalt angeordnet sein oder sich zumindest teilweise in diesen sogar hinein erstrecken. Auch hierdurch kann gegebenenfalls ein Abstand zwischen dem Magnetfeldführungsbauteil einerseits und den Magnetfeldquellen andererseits reduziert werden, sodass hierdurch wiederum eine Ausdehnung des Magnetfeldes reduziert und eine Führung desselben gegebenenfalls verbessert werden kann.

Bei einem Lager gemäß einem Ausführungsbeispiel kann das Magnetfeldführungsbauteil einen Basisabschnitt aufweisen, der die Aufnahmeabschnitte der Mehrzahl von Aufnahmeabschnitten miteinander und mit dem Umfangsabschnitt verbindet, und an einer den Magnetfeldquellen abgewandten Seite der Spulen angeordnet ist. Der Basisabschnitt kann in diesem Fall zu einer Führung des Magnetfeldes im Inneren des Magnetfeldführungsbauteils beitragen und so eine effizientere Führung des Magnetfeldes im Inneren des Magnetfeldführungsbauteils bewirken. Anders ausgedrückt kann der Basisabschnitt zu einer effizienteren Ausbildung des Magnetfeldkreises beitragen.

Bei einem Lager gemäß einem Ausführungsbeispiel können in einem dritten Winkelbereich von wenigstens 30°, der sich entlang der Umfangsrichtung an einer dem zweiten Winkelbereich abgewandten Seite unmittelbar an den ersten Winkelbereich anschließt, keine Spulen angeordnet sein. Bei einem solchen Lager gemäß einem Ausführungsbeispiel kann das Magnetfeldführungsbauteil einen weiteren Umfangsabschnitt umfassen, der wenigstens teilweise in dem dritten Winkelbereich angeordnet ist. Hierdurch kann die bereits zuvor beschriebene verbesserte Führung des Magnetfelds für Magnetfeldquellen, die gerade keiner Spule gegenüberstehen, auch bezüglich der anderen Drehrichtung realisiert werden. Die Führung des Magnetfeldes kann also auch in einem solchen Fall bezüglich der dem zweiten Winkelbereich abgewandten Seite realisiert werden, um so die Betriebssicherheit des Lagers zu verbessern.

Bei anderen Ausführungsbeispielen können der zweite und/oder der dritte winkelbereich unabhängig voneinander gegebenenfalls auch größere Werte annehmen, beispielsweise wenigstens 45°, wenigstens 60°, wenigstens 75°, wenigstens 90° oder wenigstens 120°.

Bei einem solchen Lager gemäß einem Ausführungsbeispiel kann die Mehrzahl von Magnetfeldquellen in einem vorbestimmten Winkelbereich angeordnet sein, an dem sich zu beiden Seiten des vorbestimmten Winkelbereichs jeweils unmittelbar ein weiterer vorbestimmter Winkelbereich anschließt, in denen keine Magnetfeldquellen angeordnet sind. Hierdurch kann die zuvor beschriebene Abschirmwirkung bzw. Führungswirkung des weiteren Umfangsabschnitts gegebenenfalls verbessert werden.

Bei einem solchen Lager gemäß einem Ausführungsbeispiel können der Umfangsabschnitt und der weitere Umfangsabschnitt derart ausgebildet sein, dass unabhängig von einem für das Lager spezifizierten Grad einer Verdrehung des ersten Lagerrings zu dem zweiten Lagerring, bei der die Spulen der Mehrzahl der Spulen den Magnetfeldquellen der Mehrzahl von Magnetfeldquellen wenigstens teilweise gegenüberliegen, die Magnetfeldquellen der Mehrzahl von Magnetfeldquellen den Spulen der Mehrzahl der Spulen und/oder dem Magnetfeldführungsbauteil gegenüberliegen. Anders ausgedrückt kann bei einem solchen Ausführungsbeispiel der weitere Umfangsabschnitt gegebenenfalls einen weiteren Unterabschnitt aufweisen, der ähnlich ausgebildet ist, wie der zuvor beschriebene Unterabschnitt des Umfangsabschnitts. Der spezifizierte Grad der Verdrehung der beiden Lagerringe zueinander kann hierbei beispielsweise dem Winkelbereich entsprechen, der eine effiziente elektromotorische Kopplung von Magnetfeldquellen und Spulen ermöglicht. Dieser kann beispielsweise durch einen Absolutwert einer Differenz eines Wertes des vorbestimmten Winkelbereichs und des ersten Winkelbereichs gegeben sein.

Bei einem Lager gemäß einem Ausführungsbeispiel kann das Magnetfeldführungsbauteil ein weichmagnetisches Material umfassen und/oder einstückig ausgebildet sein. Ein weichmagnetisches Material ist hierbei ein solches, das eine hohe Permeabilität und eine geringe Remanenz aufweist. Da häufig eine geringe Remanenz und ein geringes Koerzitivfeld miteinander Hand in Hand gehen, kann ein weichmagnetisches Material auch ein solches sein, das eine hohe Permeabilität und ein geringes Koerzitivfeld aufweist. Es handelt sich so häufig um einen ferromagnetischen Werkstoff, dessen Permeabilität wenigstens 150 beträgt, jedoch ebenso deutlich höhere Werte von mehr als 1000, von mehr als 10000 oder von mehr als 100000 annehmen kann. Bei Ausführungsbelspielen eines Lagers konnen so beispielsweise als weichmagnetische Werkstoffe bzw. weichmagnetische Materialien Eisen, Stähle mit einem geringen Kohlenstoffanteil, Stähle mit Siliziumzusatz, aber auch Nickel-Eisen-Legierungen und Kobalt-Eisen-Legierungen zum Einsatz kommen. Ebenso können auch andere Legierungen verwendet werden, die beispielsweise Eisen und Aluminium, und gegebenenfalls auf Silizium basieren. Im Rahmen der vorliegenden Beschreibung wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden. Ebenso kann jedoch das Magnetfeldführungsbauteil beispielsweise auch aus einer Mehrzahl von blechartigen Werkstücken gefertigt sein, die ihrerseits aus einem weichmagnetischen Material bestehen oder dieses zumindest umfassen.

Bei einem Lager gemäß einem Ausführungsbeispiel kann das Magnetfeldführungsbauteil ferner einen Führungsabschnitt aufweisen, der sich im Wesentlichen parallel zu einer Ausrichtungsfläche auf die Magnetfeldquellen der Mehrzahl von Magnetfeldquellen hin erstreckt. Die Ausrichtungsfläche kann hierbei im Wesentlichen senkrecht auf den den Magnetfeldquellen der Mehrzahl von Magnetfeldquellen zugewandten Stirnflächen der Spulen der Mehrzahl von Spulen stehen. Die Spulen weisen hierbei eine Mehrzahl von Windungen auf, die im Wesentlichen parallel zu der Stirnfläche der Spulen gewickelt sind. Anders ausgedrückt kann eine Flächennormale auf der Stirnfläche der Spulen in der Ausrichtungsfläche der Magnetfeldquellen liegen. Der Begriff der Ausrichtungsfläche ist hierbei im mathematischen Sinne zu verstehen und fällt nicht notwendigerweise mit einer gegenständlichen Oberfläche einer Komponente zusammen. Es kann jedoch passieren, dass bei Ausführungsbeispielen die Ausrichtungsfläche wenigstens teilweise mit einer Oberfläche einer Komponente zusammenfällt.

Der Führungsabschnitt kann sich bei einem Ausführungsbeispiel eines Lagers in einen Spalt zwischen die Magnetfeldquellen und die Spulen erstrecken. Hierdurch kann es gegebenenfalls möglich sein, eine Führung des Magnetfeldes, welches von den Magnetfeldquellen erzeugt wird, durch eine Verringerung des Abstands zu verbessern.

Bei einem Ausführungsbeispiel eines Lagers kann der Führungsabschnitt hierbei entlang der axialen Richtung versetzt zu den Spulen der Mehrzahl der Spulen angeordnet sein. Ebenso kann der Führungsabschnitt bei einem solchen Ausführungsbeispiel zwischen der Mehrzahl von Magnetfeldquellen und einer Laufbahn des zweiten Lagerrings oder einer Gleitfläche des zweiten Lagerrings angeordnet sein. Hierdurch kann gegebenenfalls gerade in einem Bereich, in dem das von den Magnetfeldquellen erzeugte Magnetfeld den zuvor genannten Flächen bzw. Laufbahnen am nächsten kommt, gegebenenfalls effizienter geführt werden.

So kann es sich bei einem Lager gemäß einem Ausführungsbeispiel um ein Wälzlager handeln, bei dem die beiden Lagerringe jeweils wenigstens eine Laufbahn oder Lauffläche aufweisen, zwischen denen einer oder mehrere Wälzkörper angeordnet sind und bei einer Relativbewegung der beiden Lagerringe zwischen diesen abrollen. Ebenso kann es sich jedoch bei dem Lager auch um ein Gleitlager handeln, bei dem die beiden Lagerringe entsprechend jeweils eine Gleitfläche aufweisen, die optional eine Struktur zum Fördern, Verteilen oder Bereitstellen von Schmiermittel umfassen kann. Die Gleitflächen und die Laufbahnen bzw. Laufflächen werden daher auch als Funktionsflächen des Lagers bezeichnet.

Ein Lager gemäß einem Ausführungsbeispiel kann ferner ein weiteres Magnetfeldführungsbauteil umfassen, das mit dem ersten Lagerring drehfest verbunden und mit den Magnetfeldquellen der Mehrzahl von Magnetfeldquellen in Kontakt steht. Das weitere Magnetfeldführungsbauteil kann hierbei ausgebildet sein, um eine Führung eines Magnetfelds zu bewirken, wobei das weitere Magnetfeldführungsbauteil einen Führungsabschnitt aufweist, der sich im Wesentlichen parallel zu der Ausrichtungsfläche erstreckt und entlang der Ausrichtungsfläche dem Führungsabschnitt des Magnetfeldführungsbauteils gegenüberliegt. Der Führungsabschnitt des weiteren Magnetfeldführungsbauteils kann hierbei entlang der axialen Richtung bezogen auf die Magnetfeldquellen axial versetzt sein. Hierdurch kann es also möglich sein, eine Führung des Magnetfelds dadurch zu verbessern, indem durch die gegenüberliegende Anordnung des Führungsabschnitts des Magnetfeldführungsbauteils und des Führungsabschnitts des weiteren Magnetfeldführungsbauteils ein Spalt zwischen dem Magnetfeldführungsbauteil und dem weiteren Magnetfeldführungsbauteil reduziert wird, sodass die Magnetfeldlinien nur einen beschränkten Bereich außerhalb der Magnetfeldführungsbauteile zumindest in diesem Bereich überbrücken müssen. Auch das weitere Magnetfeldführungsbauteil kann so aus einem weichmagnetischen Material gefertigt sein oder dieses umfassen. Alternativ oder ergänzend kann dieses ebenso einstückig ausgebildet sein.

Bei einem Lager gemäß einem Ausführungsbeispiel können die Spulen der Mehrzahl von Spulen und die Magnetfeldquellen der Mehrzahl von Magnetfeldquellen im Wesentlichen senkrecht zu der radialen Richtung ausgerichtet sein, wobei die radiale Richtung senkrecht auf der axialen Richtung steht und stets von dieser weg weist. In einem solchen Fall handelt es sich bei der Ausrichtungsfläche um eine senkrecht auf der axialen Richtung stehenden Ebene.

Bei einem Lager gemäß einem Ausführungsbeispiel können der Führungsabschnitt und/oder der weitere Führungsabschnitt, sofern diese implementiert sind, unmittelbar an die Mehrzahl der Magnetfeldquellen bzw. die Mehrzahl der Spulen angrenzen, um so eine möglichst kompakte Führung des Magnetfelds im Bereich der Spulen bzw. der Magnetfeldquellen zu ermöglichen. Hierdurch kann gegebenenfalls eine Ausbreitung des Magnetfelds räumlich weiter begrenzt werden.

Bei einem Lager gemäß einem Ausführungsbeispiel kann die Mehrzahl von Spulen derart angeordnet sein, dass ein Verhältnis eines Winkels, unter dem zwei benachbarte Spulen der Mehrzahl von Spulen bezogen auf einen Mittelpunkt des zweiten Lagerrings oder die axiale Richtung angeordnet sind, zu einem weiteren Winkel, unter dem zwei benachbarte Magnetfeldquellen bezogen auf einen Mittelpunkt des ersten Lagerrings oder die axiale Richtung angeordnet sind, zwischen 0,6 und 0,95 oder zwischen 1,05 und 1,4 liegt. Hierdurch kann es gegebenenfalls möglich sein, ein Ansprechverhalten des elektromotorischen Antriebs des Lagers zu verbessern.

Selbstverständlich können bei anderen Ausführungsbeispielen gegebenenfalls auch eine weitere Mehrzahl von Spulen und/oder eine weitere Mehrzahl von Magnetfeldquellen implementiert sein.

Eine Windkraftanlage gemäß einem Ausführungsbeispiel umfasst einen Rotor und ein Rotorblatt sowie ein Lager gemäß einem Ausführungsbeispiel, welches zwischen dem Rotor und dem Rotorblatt so angeordnet ist, dass das Rotorblatt mit dem ersten Lagerring und der Rotor mit dem zweiten Lagerring jeweils mechanisch drehfest verbunden sind, um eine Änderung eines Anstellwinkels des Rotorblatts zu ermöglichen.

Bei einem Lager gemäß einem Ausführungsbeispiel können die Magnetfeldquellen der Mehrzahl von Magnetfeldquellen Permanentmagnete, beispielsweise Neodym-Eisen-BorPermanentmagnete (NdFeB), oder Spulen umfassen oder durch Permanentmagnete, beispielsweise Neodym-Eisen-Bor-Permanentmagnete, oder Spulen gebildet werden. So kann durch den Einsatz von Permanentmagneten im Rahmen von oder zur Bildung der Magnetfeldquellen gegebenenfalls eine elektrische Kontaktierung derselben eingespart werden, was beispielsweise bei einem Lagerring von Vorteil sein kann, der mit der im Vergleich zu einer anderen Komponente des Geräts rotierenden bzw. sich zumindest bewegenden Komponente verbunden ist. Während im Falle einer freien Rotation gegebenenfalls durch den Einsatz von Permanentmagneten Schleifkontakte eingespart werden können, kann im Falle eines Lagers, welches lediglich um einen beschränkten Winkelbereich von beispielsweise weniger als 360° verschwenkbar ist, gegebenenfalls eine entsprechende Kabelführung eingespart werden. Andererseits kann jedoch der Einsatz von Spulen im Rahmen der Magnetfeldquellen gegebenenfalls eine bessere Ansteuerbarkeit des elektromotorischen Antriebs ermöglichen. In manchen Anwendungsszenarien kann daher auch ein zusätzlicher Aufwand zur Versorgung bzw. Kontaktierung der Spulen der Magnetfeldquellen auch bei einem rotierenden Lagerring, mit dem diese drehfest verbunden sind, interessant bzw. ratsam sein.

Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus. Benachbart sind hierbei zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen.

Nachfolgend werden unter Bezugnahme auf die beigefügten Figuren Ausführungsbeispiele näher beschrieben und erläutert.
Fig. 1 zeigt eine Querschnittsdarstellung entlang einer axialen und einer radialen Richtung durch ein Lager gemäß einem Ausführungsbeispiel;
Fig. 2 zeigt eine Querschnittsdarstellung senkrecht zu einer axialen Richtung durch ein Lager gemäß einem Ausführungsbeispiel;
Fig. 3 illustriert einen Magnetfeldlinienverlauf durch zwei benachbarte Magnetfeldquellen unterschiedlicher Polarität, die auf einem Träger aufgebracht sind;
Fig. 4 illustriert den Feldlinienverlauf der in Fig. 3 dargestellten Anordnung, wobei die Magnetfeldlinien durch ein weichmagnetisches Bauteil geführt werden;
Fig. 5 zeigt eine Querschnittsdarstellung entlang der axialen und der radialen Richtung durch ein weiteres Lager gemäß einem Ausführungsbeispiel;
Fig. 6 zeigt eine Querschnittsdarstellung entlang der axialen und der radialen Richtungen durch ein weiteres Lager gemäß einem Ausführungsbeispiel;
Fig. 7 zeigt eine Querschnittsdarstellung entlang der axialen und radialen Richtung durch ein weiteres Lager gemäß einem Ausführungsbeispiel; und
Fig. 8 zeigt eine Querschnittsdarstellung entlang der axialen und der radialen Richtungen durch ein weiteres Lager gemäß einem Ausführungsbeispiel.

Bei der nachfolgenden Beschreibung der beigefügten Figuren, die Ausführungsformen der vorliegenden Erfindung zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

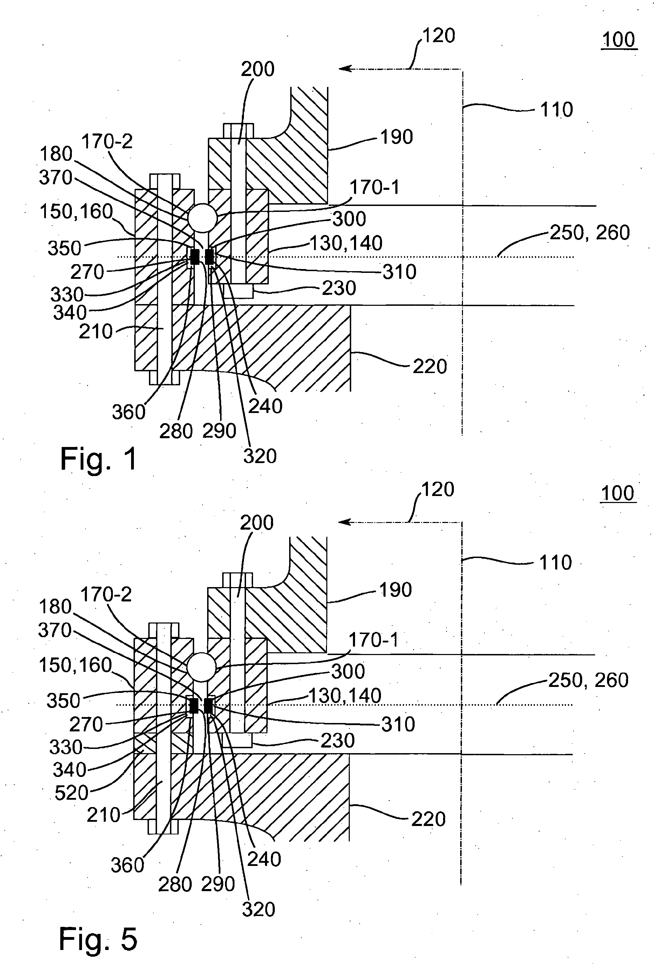

Fig. 1 zeigt eine Querschnittsdarstellung durch ein Lager 100 gemäß einem Ausführungsbeispiel, wobei die in Fig. 1 gezeigte Querschnittsebene entlang einer axialen Richtung 110 und entlang einer radialen Richtung 120 verläuft. Die radiale Richtung 120 steht hierbei senkrecht auf der axialen Richtung 110 und weist stets von dieser weg.

Das Lager 100 umfasst einen ersten Lagerring 130, bei dem es sich im vorliegenden Ausführungsbeispiel um einen Innenring 140 handelt. Das Lager 100 umfasst ferner einen zweiten Lagerring 150, bei dem es sich entsprechend bei dem vorliegenden Ausführungbeispiel um einen Außenring 160 handelt. Der erste Lagerring 130 und der zweite Lagerring 150 sind hierbei derart ausgebildet, dass diese um die axiale Richtung 110 zueinander verdrehbar sind. Zu diesem Zweck weisen der erste Lagerring 130 und der zweite Lagerring 150 jeweils wenigstens eine Laufbahn 170-1, 170-2 auf, zwischen denen ein oder mehrere Wälzkörper 180 eine Relativbewegung bzw. eine Verdrehung der beiden Lagerringe 130, 150 zueinander vermitteln. Bei dem in Fig. 1 gezeigten Ausführungsbeispiel eines Lagers 100 handelt es sich bei den Wälzkörpern 180 genauer gesagt um kugelförmige Wälzkörper, die jedoch bei anderen Ausführungsbeispielen und einer entsprechenden Ausgestaltung der Laufbahnen 170 auch anders ausgestaltet sein können. So können bei anderen Ausführungsbeispielen beispielsweise rollenförmige, zylinderförmige, nadelförmige, kegelförmige oder anders geformte Wälzkörper zum Einsatz kommen. Je nach konkreter Ausgestaltung des entsprechenden Lagers 100 kann es in einem solchen Fall gegebenenfalls ratsam sein, die Laufbahnen 170 entsprechend auszugestalten und auszurichten. So kann es beispielsweise ratsam sein, die sphärische Ausführung der Laufbahnen 170, wie sie in Fig. 1 gezeigt ist, bei Verwendung anderer Wälzkörper gegebenenfalls eben auszuführen, wobei die Laufbahnen 170 in einem solchen Fall beispielsweise parallel zu der axialen Richtung 110, jedoch auch schräg zu dieser verlaufen können.

Der Innenring 140, also der erste Lagerring 130 in dem hier gezeigten Ausführungsbeispiel eines Lagers 100, ist mit einem Rotorblatt 190 einer Windkraftanlage drehfest über eine Mehrzahl von Verschraubungen 200 verbunden, wobei in der in Fig. 1 dargestellten Querschnittsebene lediglich eine der Verschraubungen 200 dargestellt ist. Selbstverständlich können bei anderen Ausführungsbeispielen gegebenenfalls auch andere Verbindungstechniken ergänzend oder alternativ zu der in Fig. 1. gezeigten Verschraubung 200 zum Einsatz kommen. So kann beispielsweise anstelle oder ergänzend zu der Verschraubung 200 eine stoffschlüssige, formschlüssige und/oder kraftschlüssige Verbindungstechnik eingesetzt werden.

Mit dem Außenring 160, also dem zweiten Lagerring 150, ist über eine weitere Verschraubung 210 ein Rotor 220 mit dem zweiten Lagerring 150 drehfest verbunden. Der Außenring 160 und der Innenring 140 erstrecken sich hierbei entlang der axialen Richtung 110 unterschiedlich weit. So erstreckt sich der Außenring 160 weiter zu dem Rotor 220 hin, als dies bei dem Innenring 140 der Fall ist. Hierdurch kann ein Schraubenkopf 230 der Verschraubung 200 ohne den Einsatz eines zusätzlichen Abstandsbauteils eingesetzt werden.

Das Lager 100 weist ferner eine Mehrzahl von Magnetfeldquellen 240 auf, die mit dem ersten Lagerring 130, also dem Innenring bei dem in Fig. 1 gezeigten Ausführungsbeispiel eines Lagers 100, verbunden sind. Die Magnetfeldquellen 240 können hierbei einen Permanentmagneten und/oder eine Spule umfassen. Sie können gegebenenfalls auch durch einen Permanentmagneten oder eine Spule gebildet werden. Als Permanentmagnet kann grundsätzlich jede Art von Permanentmagnet eingesetzt werden, also beispielsweise ein Neodym-Eisen-Bor-Permanentmagnet, der auch als NdFeB-Permanentmagnet bezeichnet wird.

Der Einsatz von Permanentmagneten im Rahmen der Magnetfeldquellen 240 kann eine vergleichsweise einfache Aufnahme derselben ermöglichten, um so die drehfeste Verbindung zu dem ersten Lagerring 130 zu schaffen. Darüber hinaus erfordern sie im Allgemeinen ebenfalls keine elektrische Kontaktierung, für die gegebenenfalls weiterer Bauraum einzuplanen wäre. Ebenso können gegebenenfalls auch elektrische Kontaktierungen zu einer rotierenden Komponente eingespart werden, falls es sich bei dem Lager 100 um ein Lager handelt, welches um die axiale Richtung 110 beliebige Drehungen ausführen kann, also nicht nur auf eine Verschwenkung ausgerichtet ist.

Andererseits kann jedoch der Einsatz von Spulen im Rahmen der Magnetfeldquellen 240 gegebenenfalls eine bessere Ansteuerbarkeit und damit gegebenenfalls eine bessere Kontrollierbarkeit der von den Magnetfeldquellen 240 erzeugten Magnetfeldern ermöglichen.

Die Magnetfeldquellen 240 sind hierbei derart ausgerichtet und angeordnet, dass diese ihre Magnetfelder im Wesentlichen entlang einer Ausrichtungsfläche 250 bewirken. Die Ausrichtungsfläche 250 verläuft hierbei im Wesentlichen mittig durch die Magnetfeldquelle, wobei natürlich die Magnetfeldquellen 240 Streufelder und andere Feldkomponenten außerhalb der entsprechenden Ausrichtungsfläche 250 bewirken können. Die Ausrichtungsfläche 250, wie sie in Fig. 1 gezeigt ist, ist hierbei eine Ebene 260, die im Wesentlichen senkrecht auf der axialen Richtung 110 steht. Die Ausrichtungsfläche 250 ist hierbei im Sinne einer mathematischen Fläche zu verstehen, die nicht notwendigerweise eine gegenständliche Fläche darstellt. Sie kann jedoch wenigstens teilweise mit einer Oberfläche einer Komponente zusammenfallen, was jedoch bei dem in Fig. 1 gezeigten Ausführungsbeispiel in dem dort gezeigten Ausschnitt nicht der Fall ist.

Das Lager 100 weist ferner eine, im vorliegenden Fall eine Mehrzahl von Spulen 270 auf, die drehfest mit dem zweiten Lagerring 150 verbunden sind. Die Spulen 270 weisen hierbei eine Stirnfläche 280 auf, die im Wesentlichen senkrecht zu den Windungen der Spule 270 steht und ebenfalls im Wesentlichen senkrecht und mittig zu der Ausrichtungsfläche 250 angeordnet ist. Hierdurch sind die Spulen 270 und die Magnetfeldquellen 240 folglich so ausgerichtet und angeordnet, dass diese einen elektromotorischen Antrieb bilden.

Das Lager 100 umfasst ferner ein weiteres Magnetfeldführungsbauteil 290, das mit der Mehrzahl von Magnetfeldquellen 240 in Kontakt steht und derart ausgebildet ist, um ein von der Mehrzahl der Magnetfeldquellen 240 erzeugtes Magnetfeld hinsichtlich seiner Ausdehnung in axialer Richtung zu begrenzen. Zu diesem Zweck erstreckt sich das weitere Magnetfeldführungsbauteil 290 entlang der axialen Richtung 110 über die Magnetfeldquelle 240 hinaus. So weist das weitere Magnetfeldführungsbauteil 290 einen Führungsabschnitt 300 auf, der sich im Wesentlichen parallel zu der Ausrichtungsfläche 250 auf einer entlang der radialen Richtung 120 zugewandten Seite der Spulen 270 erstreckt. Der Führungsabschnitt 300 ist hierbei entlang der axialen Richtung 110 versetzt zu der Magnetfeldquelle 240 angeordnet, steht jedoch bei dem hier gezeigten Ausführungsbeispiel mit diesem in Kontakt. Der Führungsabschnitt 300 erstreckt sich hierbei entlang der radialen Richtung 120 ausgehend von einem Basisabschnitt 310 des weiteren Magnetfeldführungsbauteils 290, wobei der Basisabschnitt 310 an einer den Spulen 270 abgewandten Seite der Magnetfeldquellen 240 angeordnet ist. Genauer gesagt grenzt der Basisabschnitt 310 bei dem hier gezeigten Ausführungsbeispiel an eine den Spulen 270 abgewandte Seite der Magnetfeldquellen 240 an und kann so aufgrund seiner zuvor beschriebenen Ausgestaltung zur Führung von Magnetfeldern an der Rückseite der Magnetfeldquellen 240 austretende bzw. in diese eintretende Magnetfelder führen.

Der Führungsabschnitt 300 ist hierbei entlang der axialen Richtung 110 zwischen der Magnetfeldquelle 240 und der Lauffläche 170-1 des ersten Lagerrings 130 angeordnet. Hierdurch kann es gegebenenfalls möglich sein, das von der Magnetfeldquelle 240 erzeugte bzw. zu dieser zurückkehrende Magnetfeld insbesondere in dem Bereich zu führen, in dem Streufelder gegebenenfalls auf in das Lager 100 eindringende magnetische Partikel oder Teilchen einen besonders nachteiligen Effekt haben können.

Das weitere Magnetfeldführungsbauteil 290 umfasst, ferner einen weiteren Führungsabschnitt 320, der ebenfalls im Wesentlichen parallel zu der Ausrichtungsfläche 250 ausgerichtet ist, jedoch an einer dem Führungsabschnitt 300 abgewandten Seite der Magnetfeldquelle 240 angeordnet ist. Der Basisabschnitt 310 sowie die beiden Führungsabschnitte 300, 320 umgeben so die Magnetfeldquelle 240 in der in Fig. 1 gezeigten Querschnittsdarstellung wenigstens teilweise U-förmig.

Das Lager 100 umfasst ferner ein Magnetfeldführungsbauteil 330, das mit dem zweiten Lagerring 150 drehfest verbunden und mit den Spulen 270 der Mehrzahl von Spulen in Kontakt steht. Das Magnetfeldführungsbauteil 330 weist hierbei ebenfalls einen Basisabschnitt 340 auf, der sich an einer den Magnetfeldquellen 240 abgewandten Seite entlang der radialen Richtung 120 an die Spulen 270 anschließt. Bei dem in Fig. 1 gezeigten Lager 100 schließt sich ausgehend von dem Basisabschnitt 340 ein Führungsabschnitt 350 und ein weiterer Führungsabschnitt 360 an den Basisabschnitt 340 an, wobei der Führungsabschnitt 350 und der weitere Führungsabschnitt 360 entlang der axialen Richtung 110 an einander gegenüberliegenden Seiten der Spule 270 angeordnet sind. Der Führungsabschnitt 350 und der weitere Führungsabschnitt 360 erstrecken sich so ebenfalls ausgehend von dem Basisabschnitt 340 im Wesentlichen entlang der radialen Richtung 120 bzw. entgegen der radialen Richtung 120 im vorliegenden Ausführungsbeispiel auf die Magnetfeldquelle 240 zu.

Die Führungsabschnitte 300, 350 der beiden Magnetfeldführungsbauteile 290, 330 sowie die weiteren Führungsabschnitte 320, 360 derselben sind hierbei entlang der axialen Richtung derart ausgestaltet und ausgerichtet, dass diese auf gleicher Höhe entlang der axialen Richtung 110 liegen. Hierdurch werden auch in einem zwischen den magnetfeldquellen 240 und den Spulen 270 herrschenden Spalt 370 entlang der axialen Richtung 110 das von den Magnetfeldquellen 240 erzeugte Magnetfeld axial hinsichtlich seiner Ausdehnung beschränkt. Die Führungsabschnitte 300, 350 sowie die weiteren Führungsabschnitte 320, 360 sind hierbei im vorliegenden Ausführungsbeispiel im Wesentlichen parallel zu der Ausrichtungsfläche 250 ausgerichtet und liegen einander gegenüber.

Bei dem in Fig. 1 gezeigten Ausführungsbeispiel sind sowohl das weitere Magnetfeldführungsbauteil 290 wie auch das Magnetfeldführungsbauteil 330 mit dem ersten Lagerring 130 bzw. dem zweiten Lagerring 150 drehfest verbunden. Bei dem in Fig. 1 gezeigten Ausführungsbeispiel sind somit die beiden Magnetfeldführungsbauteile 290, 330 direkt mit den betreffenden Lagerringen 130, 150 verbunden.

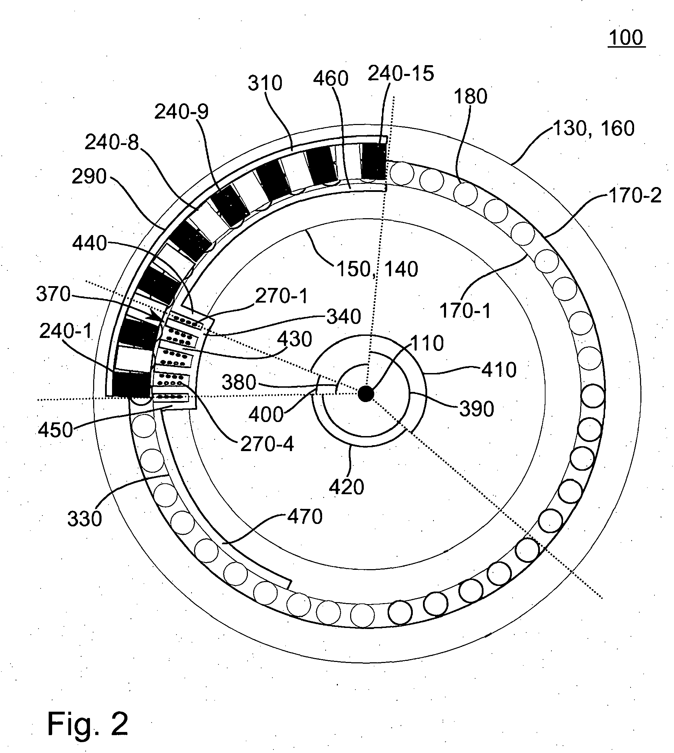

Fig. 2 zeigt eine Querschnittsdarstellung durch ein weiteres Lager 100 gemäß einem Ausführungsbeispiel, wobei die gezeigte Querschnittsebene senkrecht zu der in Fig. 1 gezeigten verläuft. So zeigt Fig. 2 eine Querschnittsebene, die im Wesentlichen senkrecht zu der axialen Richtung 110 verläuft. Das in Fig. 2 gezeigte Ausführungsbeispiel eines Lagers 100 unterscheidet sich hierbei von dem in Fig. 1 gezeigten im Wesentlichen dadurch, dass nunmehr die ersten und zweiten Lagerringe 130, 150 von denen aus dem zuvor gezeigten Ausführungsbeispiel unterscheiden. So handelt es sich im vorliegenden Fall bei dem ersten Lagerring 130 um den Außenring 160, während der Innenring 140 nunmehr der zweite Lagerring 150 ist. Entsprechend ist bei dem in Fig. 2 gezeigten Lager 100 die Mehrzahl der Magnetfeldquellen 240 mit dem Außenring 160 drehfest verbunden, der hier den ersten Lagerring 130 darstellt. Entsprechend sind die Mehrzahl der Spulen 270 mit dem Innenring 140, also dem zweiten Lagerring 150, drehfest verbunden.

So weist das Lager 100, wie es in Fig. 2 gezeigt ist, insgesamt 15 Magnetfeldquellen 240-1, ..., 240-15 auf, die benachbart zueinander in einem ersten Winkelbereich 380 angeordnet sind. Hierbei sind zwei zueinander benachbart angeordnete Magnetfeldquellen 240, also beispielsweise die beiden 240-8, 240-9, wie sie in Fig. 2 als solche auch gekennzeichnet sind, derart angeordnet und ausgebildet, dass diese bezogen auf die Spulen 270 jeweils ein Magnetfeld unterschiedlicher Polarität erzeugen. In Fig. 2 ist dies durch unterschiedlich eingefärbte Magnetfeldquellen 240 dargestellt.

An dem vorbestimmten Winkelbereich 380 schließt sich entlang der Umfangsrichtung unmittelbar ein weiterer vorbestimmter Winkelbereich 390 an, in dem keine Magnetfeldquellen 240 angeordnet sind. Selbstverständlich bleiben hierbei durch eine Drehung der beiden Lagerringe 130, 150 zueinander in den weiteren vorbestimmten Winkelbereich 390 eintretende Spulen 270 unberücksichtigt. Der weitere vorbestimmte Winkelbereich 390 erstreckt sich hierbei wenigstens über 30°, bei anderen Ausführungsbeispielen über wenigstens 45°, wenigstens 60° oder wenigstens 90°. Genauer gesagt umfasst der vorbestimmte Winkelbereich 380 in dem hier in Fig. 2 gezeigten Ausführungsbeispiel etwa 93° und der weitere vorbestimmte Winkelbereich 390 etwa 267°.

Aber auch die Spulen 270 der Mehrzahl von Spulen sind bei dem hier gezeigten Ausführungsbeispiel nur in einem beschränkten Winkelbereich, nämlich einem ersten Winkelbereich 400, angeordnet. An dem ersten Winkelbereich 400 schließen sich zu beiden Seiten entlang der in Fig. 2 nicht eingezeichneten Umfangsrichtung, die sowohl auf der axialen Richtung 110 wie auch auf der radialen Richtung 120 senkrecht steht, ein zweiter Winkelbereich 410 und entgegen der Umfangsrichtung ein dritter Winkelbereich 420 an. In dem zweiten Winkelbereich 410 und dem dritten Winkelbereich 420 sind hierbei jeweils keine Spulen 270 angeordnet. Der zweite Winkelbereich 410 und der dritte Winkelbereich 420 umfassen hierbei wenigstens 30°, bei anderen Ausführungsbeispielen wenigstens 45°, wenigstens 60° oder wenigstens 90°. Der zweite und der dritte Winkelbereich 410, 420 können hierbei unterschiedliche Ausdehnungen aufweisen.

Im Hinblick auf die Spulen 270 weist das in Fig. 2 gezeigte Lager 100 insgesamt vier Spuleri 270-1, ..., 270-4 auf. Jeweils eine Spule 270 ist hierbei auf einem Aufnahmeabschnitt 430 angeordnet, der mit dem Basisabschnitt 340 des Magnetfeldführungsbauteils 330 verbunden ist. Die Aufnahmeabschnitte 430 sind daher als Teil des Magnetfeldführungsbauteils 330 ausgestaltet.

Das Magnetfeldführungsbauteil 330 erstreckt sich hierbei über den ersten Winkelbereich 400 hinaus. So weist das Magnetfeldführungsbauteil 330 einen Umfangsabschnitt 440 auf, der sich wenigstens teilweise in den zweiten Winkelbereich 410 erstreckt bzw. in diesem angeordnet ist. Der Umfangsabschnitt 440 erstreckt sich hierbei wenigstens teilweise auf die Magnetfeldquellen 240 zu. Da auch bei diesem Ausführungsbeispiel eines Lagers 100 die Magnetfeldquellen 240 und die Spulen 270 derart ausgerichtet sind, dass die Ausrichtungsfläche 250 wieder eine Ebene 260 (beide nicht eingezeichnet m Fig. 2) darstenen, die senkrecht zu der axialen Richtung 110 verlaufen, erstreckt sich der Umfangsabschnitt 440 so wenigstens teilweise entlang der radialen Richtung auf die Magnetfeldquellen 240 zu. Die Spulen 270 und die Magnetfeldquellen 240 sind also auch bei diesem Ausführungsbeispiel einander so zugewandt und angeordnet, dass diese einen elektromotorischen Antrieb bilden.

Darüber hinaus umfasst das Magnetfeldführungsbauteil 330 ferner einen weiteren Umfangsabschnitt 450, der wenigstens teilweise in dem dritten Winkelbereich 420 angeordnet und sich ebenfalls im Wesentlichen auf die Magnetfeldquellen 240 hin zu erstreckt. So erstreckt sich auch der weitere Umfangsabschnitt 450 im Wesentlichen in radialer Richtung.

Sowohl der Umfangsabschnitt 450 wie auch der weitere Umfangsabschnitt 450 weisen jedoch einen Unterabschnitt 460 bzw. einen weiteren Unterabschnitt 470 auf, der entlang der radialen Richtung an einer dem Spalt 370 zwischen den Spulen 270 und den Magnetfeldquellen 240 zugewandten Seite des Magnetfeldführungsbauteils 330 angeordnet ist.

Durch die Implementierung der beiden Unterabschnitte 460, 470 ist es bei dem in Fig. 2 gezeigten Ausführungsbeispiel eines Lagers 100 möglich, eine Führung des Magnetfelds gegebenenfalls weiter zu verbessern. So weist das Lager 100 einen spezifizierten Grad einer Verdrehung der beiden Lagerringe 130, 150 zueinander auf, der im Wesentlichen einer Differenz zwischen dem vorbestimmten Winkelbereich 380 und dem ersten Winkelbereich 400 entspricht. Anders ausgedrückt ergibt sich der spezifizierte Grad der maximalen Verdrehung des Lagers 100 bzw. seiner beiden Lagerringe 130, 150 zueinander durch eine Differenz der Winkelbereiche, in denen die Magnetfeldquellen 240 einerseits und die Spulen 270 andererseits angeordnet sind. Die beiden Unterabschnitte 460, 470 erstrecken sich nun entlang der Umfangsrichtung des zweiten Lagerrings 150 derart, dass die Magnetfeldquellen 240 stets den Spulen 270 oder dem Magnetfeldführungsbauteil 330 und hier insbesondere den beiden Umfangsabschnitten 440, 450 und gegebenenfalls ihren beiden Unterabschnitten 460, 470 gegenüberstehen. Hierdurch treffen die von den Magnetfeldquellen 240 ausgehenden Magnetfeldlinien unabhängig von dem genauen Zustand der Verdrehung der beiden Lagerringe 130, 150 zueinander stets entweder auf die Spulen 270 oder das Magnetfeldführungsbauteil 330.

Bei den in den Fig. 1 und 2 gezeigten Ausführungsbeispielen von Lagern 100 konnen die beiden Magnetfeldführungsbauteile 290, 330 beispielsweise mithilfe ihrer Führungsabschnitte, jedoch auch mithilfe anderer Abschnitte in den Spalt 370 zwischen den Spulen 270 und den Magnetfeldquellen 240 sich erstrecken. Hierdurch kann gegebenenfalls ein Abstand, den die Magnetfeldquellen außerhalb entsprechender Magnetfeldführungsbauteile zurücklegen müssen, gegebenenfalls reduziert werden und so gegebenenfalls eine Abschirmung der Magnetfelder der Magnetfeldquellen 240 weiter verbessert werden.

Die Magnetfeldführungsbauteile 290, 330 können hierbei beispielsweise aus einem weichmagnetischen Werkstoff gefertigt sein oder einen solchen umfassen. Ein weichmagnetischer Werkstoff bzw. ein weichmagnetisches Material stellt häufig ein Material mit einer hohen Permeabilität und einer geringen Remanenz dar. Es kann sich hierbei beispielsweise um ein ferromagnetisches Material handeln, welches beispielsweise eine Permeabilität von wenigstens 150, wenigstens 1000, wenigstens 10000 oder gegebenenfalls wenigstens 100000 aufweisen kann. Da häufig die Remanenz und die entsprechenden Koerzitivfelder des entsprechenden ferromagnetischen Materials ein ähnliches Skalierungsverhalten aufweisen, kann gegebenenfalls ein weichmagnetischer Werkstoff auch ein solcher sein, der eine entsprechende hohe Permeabilität und eine relativ geringe Koerzitivfeldstärke aufweisen.

Weichmagnetische Werkstoffe wirken bei einem Durchtritt bzw. einem Auftreffen von Magnetfeldern, die sich nur mit einer geringen Frequenz ändern oder konstant sind, entgegen. Hierdurch kann eine magnetische Abschirmung von hinter dem entsprechenden Material angeordneten Komponenten erzielt werden. Lediglich der Vollständigkeit halber sei an dieser Stelle erwähnt, dass durch ein entsprechendes Material gegebenenfalls auch eine elektrische Abschirmung realisierbar ist, wenn das entsprechende Material hinreichend leitfähig ist.

Der Grund für die mögliche Abschirmwirkung liegt in den Brechungsverhältnissen bzw. dem Brechungsgesetz beim Eintritt der Magnetfelder in die entsprechende Materie. Bei Stoffen mit einer großen Permeabilität, also beispielsweise einer Permeabilität in der Größenordnung von 10000 und darüber, wird im Wesentlichen jede einfallende Feldlinie praktisch in ihre tangentiale Richtung gebrochen, während jede ausfallende Feldlinie im Wesentlichen lotrecht austritt. Die Feldlinien werden so an der Abschirmung entlang geleistet und dringen im Wesentlichen nicht durch diese hindurch.

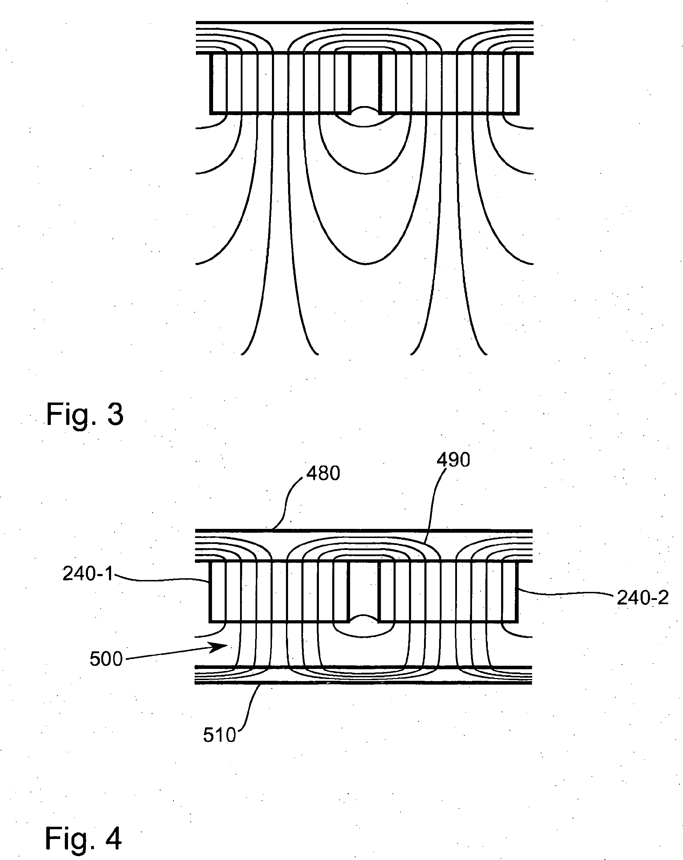

Um dies zu illustrieren, zeigt Fig. 3 schematisch zwei Magnetfeldquellen 240-1, 240-2, die benachbart zueinander angeordnet und auf einem Träger 480 angeordnet sind. Der Träger 480 kann hierbei beispielsweise aus einem weichmagnetischen Material gefertigt sein, gegebenenfalls jedoch auch hartmagnetisch oder paramagnetisch ausgestaltet sein. Es kann sich beispielsweise um ein Stahlbauteil handeln. Die beiden Magnetfeldquellen 240-1 und 240-2 sind hierbei, wie dies auch die in Fig. 3 ebenfalls eingezeichneten Feldlinien 490 zeigen, derart angeordnet, dass diese mit unterschiedlichen Polen dem Träger 480 bzw. der dem Träger abgewandten Seite ausgerichtet sind. Hierdurch bilden sich die in Fig. 3 gezeigten geschlossenen Feldlinien, die die beiden Magnetfeldquellen 240-1 und 240-2 miteinander verbinden.

Die Feldlinien 490 treten hierbei im Wesentlichen senkrecht aus den Magnetfeldquellen 240 hervor bzw. treten in diese entsprechend im Wesentlichen senkrecht hinein. Sie werden jedoch im Inneren des Trägers über seine Breite abknickend geführt und treten aus diesem praktisch nicht mehr heraus.

Allerdings durchsetzen die Magnetfeldlinien 490 einen Raumbereich 500, der an der dem Träger 480 abgewandten Seite der Magnetfeldquellen 240 angeordnet ist, deutlich.

Im Unterschied hierzu zeigt Fig. 4 die in Fig. 3 dargestellte Situation, bei der der Raumbereich 500 durch ein weichmagnetisches Bauteil 510, welches sich parallel zu dem Träger 480 erstreckt, begrenzt wird. Das weichmagnetische Bauteil 510 ist hierbei aus einem weichmagnetischen Material gefertigt, wie es zuvor beschrieben wurde. Als Folge treten die Feldlinien 490 in das weichmagnetische Bauteil 510 ein, werden dort jedoch im Wesentlichen tangential abgeleitet, bevor sie dieses wieder verlassen. Hierbei verlassen die Feldlinien 490 das weichmagnetische Bauteil im Wesentlichen senkrecht zu seiner Oberfläche, also lotrecht.

Als weichmagnetisches Material oder weichmagnetischer Werkstoff kann beispielsweise Eisen, beispielsweise sogenanntes Weicheisen, jedoch auch Stähle mit einem niedrigen Kohlenstoffanteil oder Stähle mit einem Siliziumanteil verwendet werden. Ebenso können Legierungen auf Basis von Nickel und Eisen (FeNi), sowie Legierungen auf Basis von Kobalt und Eisen (FeCo) sowie andere Legierungen, beispielsweise Eisen-AluminiumLegierung (FeAl) sowie Eisen-Aluminium-Silizium-Legierungen (FeAlSi), verwendet werden.

Als weichmagnetisches Material können so insbesondere Nickel-Eisen-Legierungen verwendet werden, bei denen ein Nickelanteil in einem weiten Bereich veränderbar ist. So kann beispielsweise eine Nickel-Eisen-Legierung mit 36 % Nickel, 50 % Nickel, 78,5 % Nickel, 80 % Nickel oder 81 % Nickel verwendet werden. Die entsprechenden Legierungen können ferner beispielsweise Molybdän mit einem Anteil zwischen 3 % und 5 %, oder auch Kobalt mit etwa 4 % umfassen. Der zu 100 % fehlende Gewichtsanteil kann dann beispielsweise durch Eisen gebildet werden. Selbstverständlich stellen die zuvor genannten Legierungen lediglich Beispiele dar, von denen gegebenenfalls auch abgewichen werden kann. Entsprechende Legierungen sind beispielsweise unter dem Namen Mu-Metall bzw. µ-Metall im Handel erhältlich.

Diese Legierungen besitzen häufig eine hohe Permeabilität mit Werten zwischen 50000 und 140000, die bewirken, dass sich der magnetische Fluss niederfrequenter Magnetfelder in dem Material konzentriert. Dieser Effekt kann bei einer Abschirmung niederfrequenter oder statischer magnetischer Felder zu einer beachtlichen Schirmdämpfung führen. Diese Legierungen können beispielsweise in Form von Folien oder Blechen unterschiedlicher Dicken, aber auch in Plattenform bezogen werden. Die erschmolzene Legierung wird hierbei nach einem Abkühlen zu der entsprechenden Form verarbeitet und kann beispielsweise durch Stanzen, Ätzen, Tiefziehen, Biegen, Löten, Schweißen oder galvanisches Beschichten weiter verarbeitet werden. Ebenso sind spanende Formgebungsverfahren, Bohren und Schleifen möglich. Ist das Werkstück hinsichtlich seiner Form fertiggestellt, kann es nach Abschluss der mechanischen Bearbeitung einer Schlussglühung bei 1000 °C bis 1200 °C sowie einer anschließenden Anlassbehandlung bei 400 °C bis 600 °C unterzogen werden. Diese thermischen Behandlungen können unter Vakuum oder Schutzgas, beispielsweise Wasserstoff, erfolgen. Durch spezielle Abkühlverfahren oder Magnetfeldglühungen können besonders hohe Permeabilitäten und andere spezielle Magneteigenschaften erreicht werden. Eine Kaltverformung nach der Wärmebehandlung kann gegebenenfalls dazu führen, dass die magnetischen Eigenschaften, also beispielsweise die Permeabilität, teilweise drastisch abnehmen. So kann beispielsweise die Permeabilität einer entsprechenden Nickel-Eisen-Legierung nach einem Kaltverformen im Bereich von etwa 150 liegen, wahrend eine magnetisch schlussgeglühte Legierung einen Wert von 50000 und darüber aufweisen kann.

Die beiden Magnetfeldführungsbauteile 290, 330 können so aus einem entsprechenden weichmagnetischen Material hergestellt werden, indem diese beispielsweise auf Basis des entsprechenden Materials durch formgebende Prozesse und einer entsprechenden, zuvor beschriebenen Wärmebehandlung gefertigt werden.

Bevor im Zusammenhang mit den Fig. 5 bis 8 weitere Ausführungsbeispiele von Lagern beschrieben werden, soll an dieser Stelle kurz darauf hingewiesen werden, dass Ausführungsbeispiele bei Weitem nicht auf den Einsatz eines elektromotorischen Antriebs in Form eines Linearmotors, wie dieser in Fig. 2 gezeigt wurde, beschränkt sind. Sie können vielmehr auch mit einem sogenannten Direktantriebsmotor (engl. Direct Drive Motor) implementiert werden, bei dem die Magnetfeldquellen 240 und die Spulen 270 entlang der betreffenden Lagerringe 130, 150 angeordnet sind.

Unabhängig von der genauen Ausgestaltung des elektromotorischen Antriebs können die Spulen 270 derart angeordnet sein, dass ein Verhältnis eines Winkels, unter dem zwei benachbarte Spulen 270 bezogen auf einen Mittelpunkt des zweiten Lagerrings 150 angeordnet sind, zu einem weiteren Winkel, unter dem zwei benachbarte Magnetfeldquellen 240 bezogen auf einen Mittelpunkt des ersten Lagerrings 130 angeordnet sind, zwischen 0,6 und 0,95 oder zwischen 1,05 und 1,4 liegt. Hierdurch kann gegebenenfalls ein Ansprechverhalten des elektromotorischen Antriebs verbessert werden.

Auch wenn im Zusammenhang mit den Fig. 1 und 2 bisher ausschließlich Kugellager, also Wälzlager mit kugelförmigen Wälzkörpern 180 beschrieben wurden, können selbstverständlich andere Ausführungsformen von Wälzlagern ebenfalls als Ausführungsbeispiele eines Lagers 100 implementiert werden. So können beispielsweise anstelle kugelförmiger Wälzkörper 180 gegebenenfalls nadelförmige, tonnenförmige, zylinderförmige, kegelstumpfförmige oder andere Wälzkörper implementiert werden. Je nach konkreter Ausgestaltung der Wälzkörper 180 kann es in einem solchen Fall gegebenenfalls ratsam sein, auch die Laufbahnen 170 der beiden Lagerringe 130, 150 entsprechend auszugestalten.

Ebenso kann es gegebenenfalls möglich sein, ein Lager 100 gemaß einem Ausfuhrungsbeispiel als Gleitlager auszuführen. In einem solchen Fall weisen die beiden Lagerringe 130, 150 jeweils eine Gleitfläche auf, an denen die beiden Lagerringe 130, 150 entlang gleiten. Je nach konkreter Ausgestaltung können in den Gleitflächen der Lagerringe 130, 150 beispielsweise Zuflussstrukturen für ein Gleitmittel oder andere Kanäle integriert sein.

Unabhängig von der Ausgestaltung als Gleit- oder Wälzlager kann es sich bei einem Lager 100 gemäß einem Ausführungsbeispiel auch um ein mehrreihiges Lager, also beispielsweise um ein zweireihiges Großschrägkugellager handeln. Zusammenfassend werden die Laufbahnen 170 und die Gleitflächen entsprechender Gleitlager auch als Funktionsflächen der betreffenden Lagerringe 130, 150 bezeichnet.

Die im Zusammenhang mit den Fig. 1 und 2 beschriebenen Lager 100 gemäß einem Ausführungsbeispiel illustrieren so, dass beispielsweise die magnetischen Felder eines als Linearantrieb ausgestalteten elektromotorischen Antriebs im Bereich des Lagers 100 dadurch abgeschirmt werden können, indem entsprechende Magnetfeldführungsbauteile integriert werden. Hierdurch kann es möglich sein, negative Auswirkungen, die sich beispielsweise durch das Aufsammeln von magnetischen Partikeln ergeben, zu verhindern, zumindest jedoch zu reduzieren. Die Implementierung eines entsprechenden weiteren Magnetfeldführungsbauteils 290 stellt hierbei eine Lösung dar, bei der also aufgrund einer abschirmenden Wirkung des verwendeten Materials und einer entsprechenden geometrischen Ausgestaltung des oder der Magnetfeldführungsbauteile 290, 330 eine Magnetfeldführung vorgenommen wird. Diese kann beispielsweise durch den Einsatz entsprechender abschirmender Bleche aus den zuvor beschriebenen Materialien implementiert werden. Anders ausgedrückt können Magnete oder andere Magnetfeldquellen 240 und die Spulen 270 gegenüber dem Joch durch den Einsatz eines entsprechenden dünnen Blechs eines weichmagnetischen Materials abgeschirmt werden.

Ergänzend können hierbei mit Hilfe von Distanzstücken, die zwischen dem Linearmotor, also den Spulen 270 und den Magnetfeldquellen 240 des elektromotorischen Antriebs und den eigentlichen Lagerringen 130, 150 implementiert werden, eine größere Distanz und damit ebenfalls eine Magnetfeldreduzierung ergänzend bewirkt werden. Durch den Einsatz entsprechender Distanzstücke kann gegebenenfalls eine Anforderung an die Magnetfeldführungsbauteile 290, 330 hinsichtlich ihrer Führungsqualitäten reduziert werden. So kann es gegebenenfalls im Falle einer direkten Integration des elektromotorischen Antriebs in die Lagerringe 130, 150, wie dies in Fig. 1 gezeigt ist, ratsam sein, eine entsprechende Abschirmung mithilfe der Magnetfeldführungsbauteile 290, 330 zu implementieren.

Fig. 5 zeigt eine Querschnittsdarstellung eines weiteren Lagers 100 gemäß einem Ausführungsbeispiel, das sich von dem in Fig. 1 gezeigten Ausführungsbeispiel lediglich hinsichtlich eines Details unterscheidet. So sind bei dem in Fig. 5 gezeigten Ausführungsbeispiel der Innenring 140, der den ersten Lagerring 130 darstellt, und der Außenring 160, der den zweiten Lagerring 150 darstellt, entlang der axialen Richtung 110 identisch ausgestaltet. Um dennoch eine Befestigung des Schraubkopfs 230 zu ermöglichen, ist zwischen dem Außenring 160 und dem Rotor 220 ein Distanzstück 520 eingesetzt, welches zu einer entsprechenden Beabstandung des Innenrings 140 von dem Rotor 220 führt, sodass der Schraubkopf 230 integrierbar ist.

Ansonsten unterscheiden sich die in den Fig. 1 und 5 gezeigten Ausführungsbeispiele nicht, weshalb an dieser Stelle auf die Beschreibung der Fig. 1 verwiesen wird.

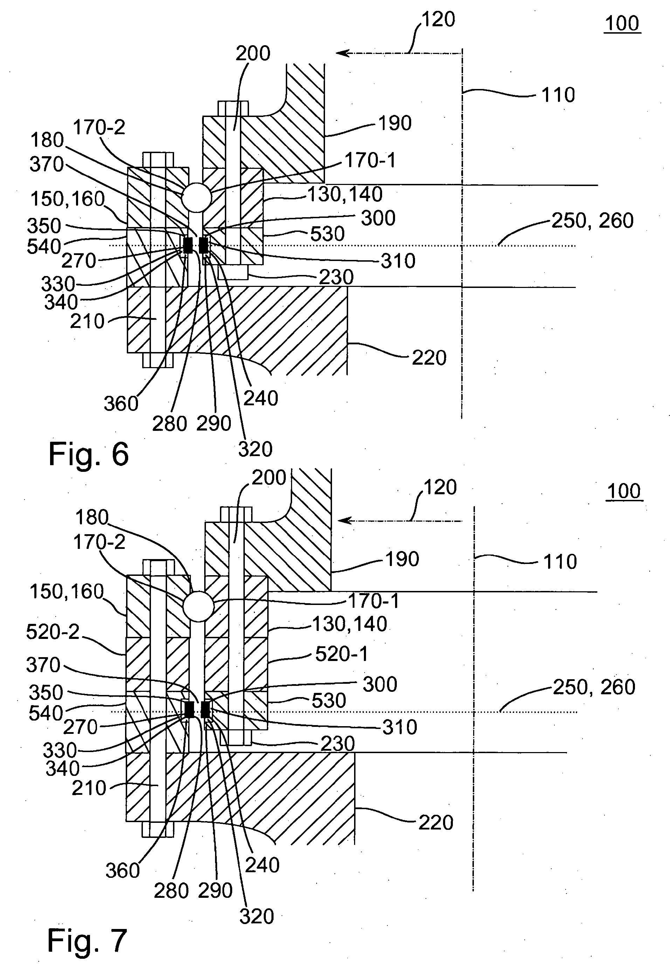

Fig. 6 zeigt eine Querschnittsdarstellung eines weiteren Ausführungsbeispiels eines Lagers 100, das sich von dem in Fig. 1 gezeigten Lager 100 nur geringfügig unterscheidet. Während bei dem in Fig. 1 gezeigten Lager 100 der elektromotorische Antrieb, also die Magnetfeldquellen 240 und die Spulen 270, in den entsprechenden Lagerringen 130, 150 integriert sind, sind diese im vorliegenden Fall nicht im Rahmen der entsprechenden Lagerringe integriert. So weist das Lager 100 ein erstes Aufnahmebauteil 530 auf, welches über die Verschraubung 200 mit dem ersten Lagerring 130 drehfest gekoppelt ist. Das erste Aufnahmebauteil 530 umfasst so das weitere Magnetfeldführungsbauteil 290 sowie die Magnetfeldquellen 240.

Das Lager 100 umfasst ferner ein zweites Aufnahmebauteil 540, das über die weitere Verschraubung 210 mit dem Außenring 160, also im vorliegenden Fall dem zweiten Lägerring 150, drehfest verbunden ist, und das das Magnetfeldführungsbauteil 330 und die Spulen 270 aufnimmt. Die beiden Magnetfeldführungsbauteile 290, 330 können mit ihren entsprechenden Aufnahmebauteilen 530, 530 beispielsweise formschlüssig, jedoch auch stoffschlüssig oder mithilfe einer anderen Verbindungstechnik verbunden sein.

Fig. 7 zeigt eine Querschnittsdarstellung eines weiteren Lagers 100 gemaß einem Ausführungsbeispiel, das sich von dem in Fig. 6 gezeigten Ausführungsbeispiel nur dadurch unterscheidet, dass nunmehr zwischen dem ersten und dem zweiten Lagerring 130, 150, also zwischen dem Innenring 140 und dem Außenring 160, nunmehr jeweils ein Distanzstück 520-1, 520-2 integriert ist. Durch den Einsatz der beiden Distanzstücke 520, die beispielsweise ringartig ausgeführt sein können, wird so ein vertikaler Abstand entlang der axialen Richtung 110 zwischen dem durch die Spulen 270 und die Magnetfeldquellen 240 gebildeten elektromotorischen Antrieb und den Laufflächen 170 der beiden Lagerringe 130, 150 vergrößert. Hierdurch kann gegebenenfalls eine weitere magnetische Entkopplung bzw. Abschirmung erzielt werden, sodass eine Gefahr eines Eindringens magnetischer Partikel in die Laufbahnen 170 der beiden Lagerringe 130, 150 aufgrund des von den Magnetfeldquellen 240 und während des Betriebs von den Spulen 270 erzeugten Magnetfelds weiter reduziert wird. Ansonsten unterscheidet sich das in Fig. 7 gezeigte Ausführungsbeispiel nicht von dem in Fig. 6 gezeigten.

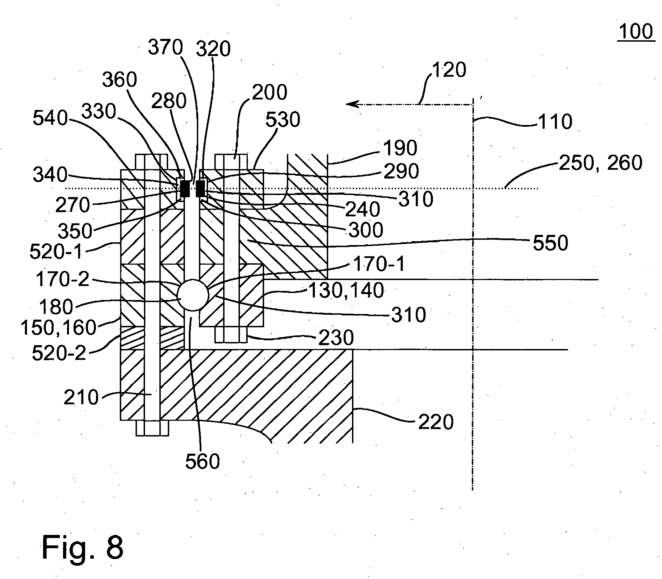

Fig. 8 zeigt eine Querschnittsdarstellung eines weiteren Lagers 100 gemäß einem Ausführungsbeispiel, bei dem die beiden Aufnahmebauteile 530, 540 für die beiden Magnetfeldführungsbauteile 290, 330 und die entsprechenden Spulen 270 und Magnetfeldquellen 240 erneut von den Laufflächen 170 der beiden Lagerringe 130, 150 entlang der axialen Richtung 110 beabstandet sind. So weist das Lager 100, wie es in Fig. 8 gezeigt ist, zwischen dem Außenring 160, also dem zweiten Lagerring 150, und dem zweiten Aufnahmebauteil 540 für die Spulen 270 und das Magnetfeldführungsbauteil 330 ein Distanzstück 520-1 auf, welches das zweite Aufnahmebauteil 540 und den zweiten Lagerring 150 entlang der axialen Richtung 110 beabstandet und trotzdem mithilfe der weiteren Verschraubung 210 drehfest verbindbar macht.

Zwischen dem ersten Lagerring 130, also dem Innenring 140, und dem ersten Aufnahmebauteil 530 für die Magnetfeldquellen 240 und das weitere Magnetfeldführungsbauteil 290 ist im Unterschied zu dem in Fig. 7 gezeigten Ausführungsbeispiel jedoch kein dediziertes Bauteil bzw. Distanzstück 520 eingesetzt. Das Rotorblatt 190 weist vielmehr einen Distanzabschnitt 550 auf, der entlang der axialen Richtung 110 eine Dicke aufweist, die der des Distanzstücks 520-1 entspricht. Hierdurch können, wie bereits in Fig. 5 gezeigt wurde, erste und zweite Lagerringe 130, 150 verwendet werden, die sich entlang der axialen Richtung 110 gleich hoch erstrecken. Entsprechend weist auch das in Fig. 8 gezeigte Ausführungsbeispiel eines Lagers 100 ein weiteres Distanzstück 520-2 auf, welches zwischen dem Rotor 220 und den zweiten Lagerring 150, also dem Außenring 160, eingesetzt ist, um für den Schraubenkopf 230 der Verschraubung 200 den entsprechenden Bauraum zu schaffen.

Bei dem in Fig. 8 gezeigten Ausführungsbeispiel eines Lagers 100 ist somit der elektromotorische Antrieb, der durch die Spulen 270 und die Magnetfeldquellen 240 gebildet wird bzw. diese zumindest umfasst, durch das Distanzstück 520-1 und das Rotorblatt 190 voneinander getrennt. Hierdurch wird wiederum eine räumliche Beabstandung entlang der axialen Richtung 110 zwischen dem elektromotorischen Antrieb und den Laufflächen 170 gebildet. Auch hier kann also durch die zusätzliche Beabstandung gegebenenfalls ein herrschendes Magnetfeld im Bereich der Laufflächen 170 verkleinert werden, sodass die Gefahr, magnetische Partikel im Bereich der Laufflächen 170 anzusammeln, reduziert wird.

Bei den zuvor beschriebenen Ausführungsbeispielen handelt es sich im Wesentlichen um Wälzlager, bei denen ein entsprechender Wälzkörper 180 zwischen den Laufbahnen 170 der beiden Lagerringe 130, 150 abrollt. Hierdurch weist das Lager 100 im Bereich der beiden Lagerringe 130, 150 einen weiteren Spalt 560 auf, der zusammen mit dem Spalt 370 zwischen den Magnetfeldquellen 240 und den Spulen 270 einen gemeinsamen durchgängigen Spalt bildet. Der gemeinsame durchgängige Spalt ist hierbei im Wesentlichen ununterbrochen. So schneidet eine Gerade im mathematischen Sinn, die von einem ersten Punkt ausgeht, der auf einer Verbindungsgeraden zwischen den beiden Laufbahnen 170 der beiden Lagerringe 130, 150 liegt, zu einem zweiten Punkt, der auf einer Verbindungsgeraden zwischen den Magnetfeldquellen 240 und der Spulen 270 liegt, gerade kein weiteres Bauteil. Anstelle der zuvor genannten Geraden zwischen den Laufbahnen 170 bzw. den Spulen 270 und den Magnetfeldquellen 240 können auch entsprechende Ebenen, beispielsweise die Ebene 260, hierfür verwendet werden.

Das Lager 100, wie es in Fig. 8 gezeigt ist, umfasst ferner ein zweites Distanzstück 520-2, welches zwischen dem zweiten Lagerring 150, also dem Außenring 160, und dem Rotor 220 angeordnet ist. Wie bereits im Zusammenhang mit Fig. 5 beschrieben wurde, dient dieses zweite Distanzstück 520 dazu, bei identisch hohen Lagerringen 130, 150 entlang der axialen Richtung 110 Bauraum für den Schraubenkopf 230 der Verschraubung 200 zu schaffen.

Wie das im Zusammenhang mit Fig. 2 gezeigte Ausführungsbeispiel im vergleich zu den weiteren im Zusammenhang mit den Fig. 1, 5, 6, 7 und 8 beschriebenen Ausführungsbeispielen eines Lagers 100 gezeigt hat, können der erste Lagerring 130 und der zweite Lagerring 150 wahlweise als Innenring 140 oder als Außenring 160 implementiert werden. Je nach Wahl des ersten bzw. zweiten Lagerrings 130, 150 sind entweder die Magnetfeldquellen 240 und die Spulen 270 mit dem Innenring 140 oder dem Außenring 160 drehfest verbunden.

Wie ebenfalls bereits zuvor erläutert wurde, sind Ausführungsbeispiele eines Lagers 100 ebenso wenig auf die genaue Ausgestaltung der Wälzkörper 180 und der Laufbahnen 170 beschränkt. So können die zuvor erwähnten Alternativen ebenso implementiert werden, wie andere, hier nicht erwähnte Wälzkörpergeometrien. Ebenso können die Lager 100 gemäß einem Ausführungsbeispiel ebenso als Gleitlager implementiert werden, sodass die Laufbahnen 170 als Gleitflächen ausgestaltet sind. Laufbahnen 170 und Gleitflächen werden daher zusammenfassend auch als Funktionsflächen bezeichnet.

Die in der vorstehenden Beschreibung, den Ansprüchen und den Zeichnungen offenbarten Merkmalen können sowohl einzeln als auch in beliebiger Kombination für die Verwirklichung der Erfindung in ihren verschiedenen Ausgestaltungen von Bedeutung sein.

## Patentansprüche

1. Lager (100) mit folgenden Merkmalen:
einem ersten Lagerring (130) und einem zweiten Lagerring (150), wobei der erste (130) und der zweite Lagerring (150) zueinander um eine axiale Richtung (110) drehbar angeordnet sind;
einer Mehrzahl von benachbart zueinander angeordneten und mit dem ersten Lagerring (130) drehfest verbundenen Magnetfeldquellen (240);
einer Mehrzahl von mit dem zweiten Lagerring (150) drehfest verbundenen Spulen (270), wobei die Spulen (270) der Mehrzahl von Spulen (270) entlang einer senkrecht zu der axialen Richtung (110) stehenden Umfangsrichtung benachbart zueinander in einem ersten Winkelbereich (400) angeordnet sind, wobei in einem zweiten Winkelbereich (410) von wenigstens 30°, der sich unmittelbar an den ersten Winkelbereich (400) entlang der Umfangsrichtung anschließt, keine Spulen (270) angeordnet sind, und wobei die Mehrzahl von Spulen (270) und die Mehrzahl von Magnetfeldquellen (240) derart angeordnet und ausgerichtet sind, dass diese einen elektromotorischen Antrieb bilden; und **gekennzeichnet durch**
ein von dem zweiten Lagerring (150) verschiedenes Magnetfeldführungsbauteil (330), das ausgebildet ist, um eine Führung eines Magnetfelds zu bewirken, und das eine Mehrzahl von Aufnahmeabschnitten (430) aufweist, auf denen jeweils eine Spule (270) der Mehrzahl von Spulen (270) angeordnet ist;
wobei das Magnetführungsbauteil (330) einen Umfangsabschnitt (440) umfasst, der wenigstens teilweise in dem zweiten Winkelbereich (410) angeordnet ist; und
wobei der Umfangsabschnitt (440) einen Unterabschnitt (460) aufweist, der sich im Wesentlichen entlang der Umfangsrichtung in dem zweiten Winkelbereich (410) von dem ersten Winkelbereich (400) weg erstreckt.

2. Lager (100) nach Anspruch 1, bei dem sich der Umfangsabschnitt (440) in dem zweiten Winkelbereich (410) wenigstens teilweise auf die Magnetfeldquellen (240) der Mehrzahl von Magnetfeldquellen (240) hin erstreckt.

3. Lager (100) nach einem der vorhergehenden Ansprüche, bei dem zwischen den Magnetfeldquellen (240) der Mehrzahl von Magnetfeldquellen (240) und den Spulen (270) der Mehrzahl von Spulen (270) entlang einer senkrecht auf der axialen Richtung (110) und der Umfangsrichtung stehenden radialen Richtung (120) ein Spalt (370) geformt ist, und bei dem der Unterabschnitt (460) entlang der radialen Richtung (120) an einer dem Spalt (370) zugewandten Seite des Magnetfeldführungsbauteils (330) angeordnet ist.

4. Lager (100) nach einem der vorhergehenden Ansprüche, bei dem das Magnetfeldführungsbauteil (330) einen Basisabschnitt (340) aufweist, der die Aufnahmeabschnitte (430) der Mehrzahl von Aufnahmeabschnitten (430) miteinander und mit dem Umfangsabschnitt (440) verbindet, und an einer den Magnetfeldquellen (240) abgewandten Seite der Spulen (270) angeordnet ist.

5. Lager (100) nach einem der vorhergehenden Ansprüche, bei dem in einem dritten Winkelbereich (420) von wenigstens 30°, der sich entlang der Umfangsrichtung an einer dem zweiten Winkelbereich (410) abgewandten Seite unmittelbar an den ersten Winkelbereich (400) anschließt, keine Spulen angeordnet sind, und bei dem das Magnetführungsbauteil (330) einen weiteren Umfangsabschnitt (450) umfasst, der wenigstens teilweise in dem dritten Winkelbereich (420) angeordnet ist.

6. Lager (100) nach Anspruch 5, bei dem die Mehrzahl von Magnetfeldquellen (240) in einem vorbestimmten Winkelbereich (380) angeordnet ist, an den sich zu beiden Seiten des vorbestimmten Winkelbereichs (380) jeweils unmittelbar em weiterer vorbestimmter Winkelbereich (390) anschließt, in denen keine Magnetfeldquellen ange-ordnet sind.

7. Lager (100) nach Anspruch 6, bei dem der Umfangsabschnitt (440) und der weitere Umfangsabschnitt (450) derart ausgebildet sind, dass unabhängig von einem für das Lager (100) spezifizierten Grad einer Verdrehung des ersten Lagerrings (130) zu dem zweiten Lagerring (150), bei der die Spulen (270) der Mehrzahl der Spulen (270) den Magnetfeldquellen (240) der Mehrzahl von Magnetfeldquellen (240) wenigstens teilweise gegenüberliegen, die Magnetfeldquellen (240) der Mehrzahl von Magnetfeldquellen (240) den Spulen (270) der Mehrzahl der Spulen (270) und/oder dem Magnetfeldführungsbauteil (330) gegenüberliegen.

8. Lager (100) nach einem der vorhergehenden Ansprüche, bei dem das Magnetfeldführungsbauteil (330) ein weichmagnetisches Material umfasst und/oder einstückig ausgebildet ist.

9. Windkraftanlage mit folgenden Merkmalen:
einem Rotor (220) und einem Rotorblatt (190); und
einem Lager (100) gemäß einem der vorhergehenden Ansprüche, das zwischen dem Rotor (220) und dem Rotorblatt (190) so angeordnet ist, dass das Rotorblatt (190) mit dem ersten Lagerring (130) und der Rotor (220) mit dem zweiten Lagerring (150) jeweils mechanisch drehfest miteinander verbunden sind, um eine Änderung eines Anstellwinkels des Rotörblatts (190) zu ermöglichen.

## Claims

1. Bearing (100) with the following features:
a first bearing ring (130) and a second bearing ring (150), wherein the first bearing ring (130) and the second bearing ring (150) are arranged rotatably in relation to one another about an axial direction (110);
a plurality of magnetic field sources (240), which are arranged adjacent to one another and are connected to the first bearing ring (130) for conjoint rotation,
a plurality of coils (270), which are connected to the second bearing ring (150) for conjoint rotation, wherein the coils (270) of the plurality of coils (270) are arranged adjacent to one another in a circumferential direction perpendicular to the axial direction (110) in a first angle region (400), wherein, in a second angle region (410) of at least 30°, which directly adjoins the first angle region (400) in the circumferential direction, no coils (270) are arranged, and wherein the plurality of coils (270) and the plurality of magnetic field sources (240) are arranged and aligned in such a way that they form an electromotive drive; and **characterized by**
a magnetic-field guiding component (330), which is different from the second bearing ring (150) and is designed to have the effect of guiding a magnetic field and which has a plurality of receiving sections (430), on which one coil (270) of the plurality of coils (270) is arranged in each case;
wherein the magnetic guiding component (330) comprises a circumferential section (440), which is at least partially arranged in the second angle region (410); and
wherein the circumferential section (440) has a subsection (460), which extends substantially along the circumferential direction in the second angle region (410) away from the first angle region (400).

2. Bearing (100) according to Claim 1, in which the circumferential section (440) in the second angle region (410) extends at least partially towards the magnetic field sources (240) of the plurality of magnetic field sources (240).

3. Bearing (100) according to one of the preceding claims, in which a gap (370) is formed between the magnetic field sources (240) of the plurality of magnetic field sources (240) and the coils (270) of the plurality of coils (270) along a radial direction (120) perpendicular to the axial direction (110) and to the circumferential direction, and in which the subsection (460) is arranged along the radial direction (120) on a side of the magnetic-field guiding component (330) that is facing the gap (370).

4. Bearing (100) according to one of the preceding claims, in which the magnetic-field guiding component (330) has a base section (340), which connects the receiving sections (430) of the plurality of receiving sections (430) to one another and to the circumferential section (440), and is arranged on a side of the coils (270) that is facing away from the magnetic field sources (240).

5. Bearing (100) according to one of the preceding claims, in which in a third angle region (420) of at least 30°, which directly adjoins the first angle region (400) along the circumferential direction on the side facing away from the second angle region (410), no coils are arranged, and in which the magnetic guiding component (330) comprises a further circumferential section (450), which is at least partially arranged in the third angle region (420).

6. Bearing (100) according to Claim 5, in which the plurality of magnetic field sources (240) are arranged in a predetermined angle region (380), which is directly adjoined on each of both sides of the predetermined angle region (380) by a further predetermined angle region (390), in which no magnetic field sources are arranged.

7. Bearing (100) according to Claim 6, in which the circumferential section (440) and the further circumferential section (450) are formed in such a way that, irrespective of a degree of turning of the first bearing ring (130) in relation to the second bearing ring (150) that is specified for the bearing (100), in which turning the coils (270) of the plurality of coils (270) at least partially lie opposite the magnetic field sources (240) of the plurality of magnetic field sources (240), the magnetic field sources (240) of the plurality of magnetic field sources (240) lie opposite the coils (270) of the plurality of coils (270) and/or the magnetic-field guiding component (330).

8. Bearing (100) according to one of the preceding claims, in which the magnetic-field guiding component (330) comprises a magnetically soft material and/or is formed in one piece.

9. Wind turbine with the following features:
a rotor (220) and a rotor blade (190); and
a bearing (100) according to one of the preceding claims, which is arranged between the rotor (220) and the rotor blade (190) in such a way that the rotor blade (190) is mechanically connected to the first bearing ring (130) and the rotor (220) is mechanically connected to the second bearing ring (150) in each case for conjoint rotation with one another, in order to allow a change of the angle of attack of the rotor blade (190).

## Revendications

1. Palier (100) comprenant les caractéristiques suivantes :
une première bague de palier (130) et une deuxième bague de palier (150), la première bague de palier (130) et la deuxième bague de palier (150) étant disposées l'une par rapport à l'autre de manière à pouvoir tourner autour d'une direction axiale (110) ;
une pluralité de sources de champ magnétique (240) disposées de manière adjacente les unes aux autres et connectées de manière solidaire en rotation à la première bague de palier (130) ;
une pluralité de bobines (270) connectées de manière solidaire en rotation à la deuxième bague de palier (150), les bobines (270) de la pluralité de bobines (270) étant disposées le long d'une direction périphérique perpendiculaire à la direction axiale (110) de manière adjacente les unes aux autres suivant une première plage angulaire (400), aucune bobine (270) n'étant disposée dans une deuxième plage angulaire (410) d'au moins 30°, qui se raccorde directement à la première plage angulaire (400) le long de la direction périphérique, et la pluralité de bobines (270) et la pluralité de sources de champ magnétique (240) étant disposées et orientées de telle sorte que celles-ci forment un entraînement à moteur électrique ; et **caractérisé par** un composant de guidage de champ magnétique (330) différent de la deuxième bague de palier (150), lequel est réalisé de manière à provoquer un guidage d'un champ magnétique et lequel présente une pluralité de sections de réception (430) sur lesquelles est à chaque fois disposée une bobine (270) de la pluralité de bobines (270) ;
le composant de guidage de champ magnétique (330) comprenant une section périphérique (440) qui est disposée au moins en partie dans la deuxième plage angulaire (410) ; et
la section périphérique (440) présentant une sous-section (460) qui s'étend essentiellement le long de la direction périphérique dans la deuxième plage angulaire (410) depuis la première plage angulaire (400).

2. Palier (100) selon la revendication 1, dans lequel la section périphérique (440) s'étend dans la deuxième plage angulaire (410) au moins en partie sur les sources de champ magnétique (240) de la pluralité de sources de champ magnétique (240).

3. Palier (100) selon l'une quelconque des revendications précédentes, dans lequel une fente (370) est formée entre les sources de champ magnétique (240) de la pluralité de sources de champ magnétique (240) et les bobines (270) de la pluralité de bobines (270) le long d'une direction radiale (120) perpendiculaire à la direction axiale (110) et à la direction périphérique, et dans lequel la sous-section (460) est disposée le long de la direction radiale (120) au niveau d'un côté du composant de guidage de champ magnétique (330) tourné vers la fente (370).

4. Palier (100) selon l'une quelconque des revendications précédentes, dans lequel le composant de guidage de champ magnétique (330) présente une section de base (340) qui relie les sections de réception (430) de la pluralité de sections de réception (430) les unes aux autres et à la section périphérique (440) et qui est disposée au niveau d'un côté des bobines (270) opposé aux sources de champ magnétique (240).

5. Palier (100) selon l'une quelconque des revendications précédentes, dans lequel, dans une troisième plage angulaire (420) d'au moins 30°, qui se raccorde directement à la première plage angulaire (400) le long de la direction périphérique au niveau d'un côté opposé à la deuxième plage angulaire (410), aucune bobine n'est prévue et dans lequel le composant de guidage de champ magnétique (330) comprend une section périphérique supplémentaire (450) qui est disposée au moins en partie dans la troisième plage angulaire (420).

6. Palier (100) selon la revendication 5, dans lequel la pluralité de sources de champ magnétique (240) est disposée dans une plage angulaire prédéterminée (380) à laquelle se raccorde à chaque fois directement, des deux côtés de la plage angulaire prédéterminée (380), une plage angulaire prédéterminée supplémentaire (390) dans laquelle n'est disposée aucune source de champ magnétique.

7. Palier (100) selon la revendication 6, dans lequel la section périphérique (440) et la section périphérique supplémentaire (450) sont réalisées de telle sorte qu'indépendamment d'un degré de rotation, spécifié pour le palier (100), de la première bague de palier (130) par rapport à la deuxième bague de palier (150), dans lequel les bobines (270) de la pluralité des bobines (270) sont au moins en partie opposées aux sources de champ magnétique (240) de la pluralité de sources de champ magnétique (240), les sources de champ magnétique (240) de la pluralité de sources de champ magnétique (240) sont opposées aux bobines (270) de la pluralité de bobines (270) et/ou au composant de guidage de champ magnétique (330).

8. Palier (100) selon l'une quelconque des revendications précédentes, dans lequel le composant de guidage de champ magnétique (330) comprend un matériau magnétique doux et/ou est réalisé d'une seule pièce.

9. Éolienne comprenant les caractéristiques suivantes
un rotor (220) et une pale de rotor (190) ; et
un palier (100) selon l'une quelconque des revendications précédentes, qui est disposé entre le rotor (220) et la pale de rotor (190) de telle sorte que la pale de rotor (190) avec la première bague de palier (130) et le rotor (220) avec la deuxième bague de palier (150) soient à chaque fois connectés l'un à l'autre mécaniquement de manière solidaire en rotation afin de permettre une variation d'un angle d'inclinaison de la pale de rotor (190).
